Europäisches Patentamt

European Patent Office

Office européen des brevets

(11) Veröffentlichungsnummer: **0 269 843**
A-2

(12) **EUROPÄISCHE PATENTANMELDUNG**

(21) Anmeldenummer: 87115654.3

(22) Anmeldetag: 26.10.87

(51) Int. Cl.4: **F41G 3/32** , F41G 11/00 , F41G 7/22

(30) Priorität: 31.10.86 DE 3637000

(43) Veröffentlichungstag der Anmeldung:
08.06.88 Patentblatt 88/23

(84) Benannte Vertragsstaaten:
DE FR GB IT NL

(71) Anmelder: DIEHL GMBH & CO.
Stephanstrasse 49
D-8500 Nürnberg(DE)

(72) Erfinder: Westphal, Robert, Dr.
Hessenstrasse 13
D-8503 Altdorf(DE)
Erfinder: Herrmann, Karl, Dr.
Blütenstrasse 9
D-8501 Eckental(DE)

(74) Vertreter: Hofmann, Gerhard, Dipl.-Ing.,
Patentassessor et al
Stephanstrasse 49
D-8500 Nürnberg(DE)

(54) Prüfeinrichtung, insbesondere für den Suchkopf intelligenter Lenkmunition.

(57) Eine Prüfeinrichtung (11), wie sie insbesondere für Suchköpfe (13) intelligenter Lenkmunition (21) bekannt ist, soll bei verringertem apparativem Aufwand insbesondere hinsichtlich des Antennen-Arrays einen realistischeren Test des Suchkopfes (13) und seiner Signalverarbeitungseinrichtung (24) ermöglichen, was insbesondere den im Prüfbetrieb realisierbaren Scan-Winkel und die Endphasen-Bewegung bei der Zielannäherung betrifft. Dafür wird einerseits der Suchkopf (13) und andererseits der Zielsimulator (20) jeweils im Brennpunkt (14) eines quasioptischen Abbildungssystems (15) positioniert, das vorzugsweise aus zwei über Parallelstrahlen (18) gekoppelten parabolischen Hohlspiegeln (19) besteht. Nun kann der Suchkopf (13) über die gesamte Spiegelfläche und damit in einem sehr großen Raumwinkel verschwenkt werden, ohne daß die Erfassung des Zielsimulators (20) verloren geht, weil dieser im anderen Brennpunkt (14) liegt.

## Prüfeinrichtung, insbesondere für den Suchkopf intelligenter Lenkmunition

Die Erfindung betrifft eine Prüfeinrichtung gemäß dem Oberbegriff des Anspruches 1.

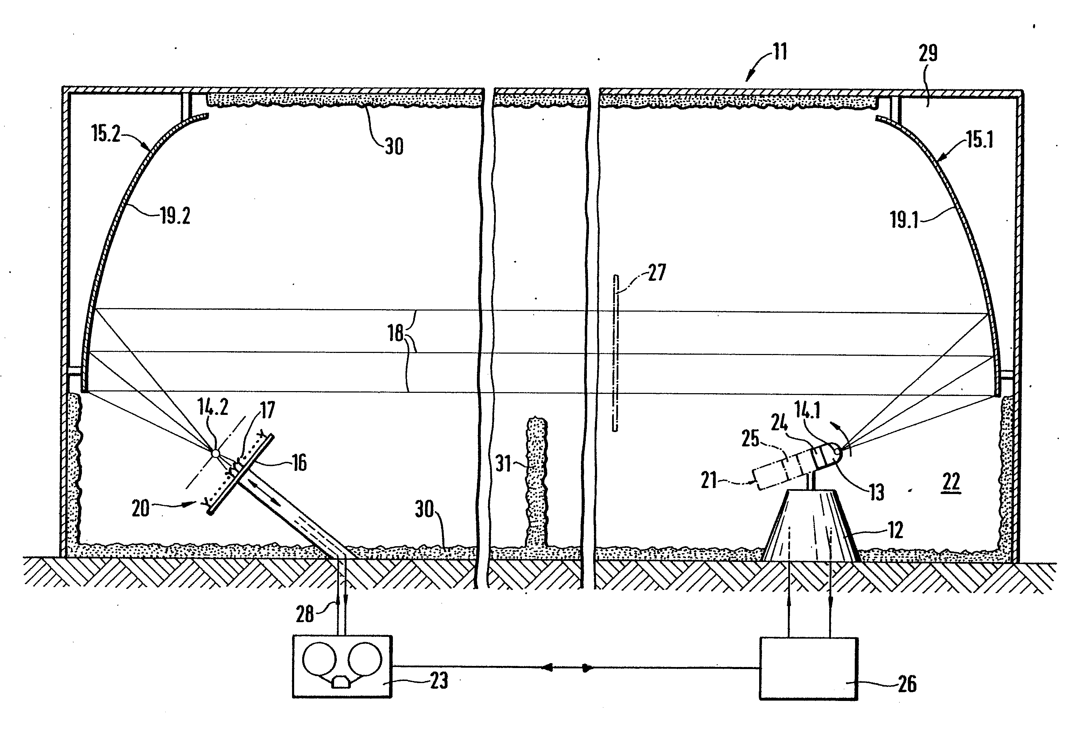

Eine solche Prüfeinrichtung ist bekannt aus der Darstellung "Hardware-in-the-Loop" Simulation aus mikrowellen magazin, Vol. 11 No. 4, 1985 Seiten 406-408, insbesondere mittlere Spalte von Seite 407, oder aus MSDH 1984 Seite 36 Fig. 22. In beiden Füllen bestehen als Transponder arbeitende Zielsimulatoren aus einer großen Anzahl von Antennenelementen, die von einem davor auf einem Dreiachsen-Drehtisch positionierten Suchkopf angestrahlt werden; mit Rückstrahlung der aufgenommenen Energie nach Verarbeitung in einem Simulationsrechner, um vom Suchkopf zu verarbeitende Zielsignaturen in Clutter-Umgebung zu simulieren. Schon der apparative Aufbau für eine derartige Simulations-Antennenanlage ist allerdings enorm, ganz zu schweigen vom Hardware-und Software-Aufwand für die Realisierung der Ansteuerung aus dem Simulationsrechner. Deshalb ist nur eine relativ begrenzte mit Antennenelementen besetzte Fläche als Zielsimulator realisierbar. Das aber hat zur Folge, daß nur bei einem sehr kleinen (nämlich im Vergleich zum tatsächlichen Scan-Winkel unrealistisch kleinen) Schwenkwinkel das Antennen-Array des Zielsimulators tatsächlich vom Suchkopf erfaßt wird; während eine dichte Annäherung des Suchkopfes an die Ebene des Arrays aus Antennenelementen zur Vergrößerung des Erfassungswinkels nicht möglich ist, weil dann die unter großem Winkel liegenden einzelnen Antennenelemente nicht unter Fernfeld-Bedingungen erfaßt werden, so daß dann eine auswertbare Transponder-Antwort mit realistischer Zielsignatur nicht mehr realisierbar ist. Zwar könnte durch äußere Eingriffe der Abtastwinkel des Suchkopfes (also die Scan-Bewegung seiner Antenne) auf einen Winkel begrenzt werden, unter dem im Fernfeld das Antennen-Array des Zielsimulators gerade nicht mehr verlassen wird. Das aber erfordert Eingriffe in die Funktion des Suchkopfes und seiner Signalverarbeitungseinrichtung wie in die Funktion des Flugreglers einer mit dem Suchkopf ausgestatteten Lenkmunition, so daß es sich dann tatsächlich nicht mehr um realistische Test-Bedingungen, also nicht mehr um den sogenannten "Hardware-in-the Loop"-Betrieb handelt, die Testergebnisse also nicht mehr unbedingt aussagekräftig für das Verhalten der Lenkmunition unter realen Einsatzbedingungen sind. Außerdem ist bei einer realisierbaren Zielsimulation mittels einer solchen Antennenwand abgesehen vom zu sehr beschränkten Arbeitswinkel die Auflösung nicht groß genug, um die Bewegung einer Lenkmunition beim Einschwenken auf das verfolgte Ziel, nämlich die Sichtlinien-Drehrate bei der Kollisionskursnavigation, über den gesamten Annäherungsvorgang realisieren zu können, was aber erforderlich wäre, um die Funktionstüchtigkeit des Autopiloten im Zielverfolgungs-Flugregler nachweisen zu können. Hierfür ließe sich zwar der reale Aspektwinkel, wie er unter Sichtlinien-Dreheffekten auftritt, dadurch simulieren, daß ein Roboter-Handhabungsapparat einen Cornerreflektor längs entsprechender räumlicher Bewegungsbahnen bezüglich des Suchkopfes verschwenkt -- was dann aber nicht die gleichzeitige Auswertung realistischer Zielgebietsstrahlung (also den Test von auf die Zielsignatur anzuwendenden Erkennungsalgorithmen) erlaubt.

In Erkenntnis dieser Gegebenheiten, die gegenwärtig die realisierbaren Möglichkeiten aussagekräftiger Funktionstests an Suchköpfen für Lenkmunition bzw. an mit Suchköpfen ausgestatteter Lenkmunition stark einschränken, liegt der Erfindung die Aufgabe zugrunde, eine Prüfeinrichtung gattungsgemäßer Art zu schaffen, die weitestgehend ohne Funktionseinschränkungen hinsichtlich der Arbeitsweise des Suchkopfes und dennoch preisgünstig erstellbar ist und im Interesse günstiger Auslastung auch Einsatzmöglichkeiten für andere Prüfaufgaben eröffnet.

Diese Aufgabe ist erfindungsgemäß im wesentlichen dadurch gelöst, daß die gattungsgemäße Prüfeinrichtung gemäß dem Kennzeichnungsteil des Anspruches 1 ausgelegt ist.

Danach beruht die erfindungsgemäße Lösung auf der Erkenntnis, daß für die Suchkopf-Bewegung extrem große und damit alle praktisch interressierenden Bewegungswinkel ohne Verlust des einmal aufgefaßten simulierten Zieles möglich sind, wenn zwischen dem Zielsimulator und dem Suchkopf eine der Strahlengeometrie folgende quasi-optische Kopplung über ein Abbildungssystem gegeben ist und einerseits der Suchkopf sowie andererseits der Zielsimulator in dem oder nahe bei dem jeweiligen Brennpunkt der dadurch ausgebildeten Übertragungsstrecke liegt. Dadurch entfällt nicht nur die winkelmäßige Einschränkung beim Anstrahlen einer Antennenwand, sondern auch der immense Kostenaufwand für die synthetische Antennenanlage (die doch nicht alle Flugphasen-Funktionen realisieren läßt) entfällt. Denn die strahlengeometrische Kopplung kann über ein Abbildungssystem nach Art zweier Sammellinsen oder apparativ einfacher noch, nach Art zweier parabolischer oder elliptischer Hohlspiegel (wie sie als Mikrowellen-Richtfunkspiegel bekannt sind) realisiert werden.

Diese Prüfeinrichtung kann gleichermaßen für Strahlungsenergie im Mikrowellenbereich oder im Infrarotbereich ausgelegt sein und sowohl für aktive wie auch für passive Suchköpfe Anwendung finden. Für die Zielsignatur-Einspeisung beim Zielsimulator (nämlich zur Modulation aufgefangener Energie vom aktiven Suchkopf oder zur Anregung eines passiven Suchkopfes) kann auf gemessene oder auf synthetisch erzeugte Ziel-und Clutter-Signaturen zurückgegriffen werden, wie sie beispielshalber in der DE-OS 34 34 326 erläutert sind.

Die gleiche Prüfeinrichtung kann aber auch ohne Betrieb des Zielsimulators eingesetzt werden, um im Wege der Parallelstrahlen zwischen den beiden Elementen des quasi-optischen Abbildungssystems die Antennencharakteristik eines Suchkopfes auszumessen.

Zusätzliche Alternativen und Weiterbildungen sowie weitere Merkmale und Vorteile der Erfindung ergeben sich aus den weiteren Ansprüchen und, auch unter Berücksichtigung der Darlegungen in der Zusammenfassung, aus nachstehender beschreibung eines in der Zeichnung unter Beschränkung auf das Wesentliche stark abstrahiert und nicht ganz maßstabsgerecht skizzierten bevorzugten Realisierungsbeispiels zur erfindungsgemäßen Lösung. Die einzige Figur der Zeichnung zeigt im Aufriß durch die Brennpunkte des Abbildungssystems die Anordnung eines Suchkopfes in Relation zum Zielsimulator.

Die Prüfeinrichtung 11 besteht im wesentlichen aus einèm Dreiachsen-Drehtisch 12 zur räumlich verschwenkbaren Halterung eines Suchkopfes 13 im Brennpunkt 14.1 des ersten Elementes eines quasioptischen Abbildungssystems 15.1 und aus einer Halterung 16 für wenigstens ein Antennenelement 17 in der Nähe des Brennpunktes 14.2 des zweiten Elementes des quasioptischen Abbildungssystems 15.2. Zwischen den beiden Elementen des Abbildungssystems 15.1-15.2 besteht eine strahlengeometrische Kopplung durch Parallelstrahlen 18. Im dargestellten bevorzugten Beispielsfalle handelt es sich beim Abbildungssystem 15 um zwei einander gegenüberstehende parabolische Hohlspiegel 19.1-19.2 mit exzentrischen Brennpunkten 14.1/14.2 und mit guten Reflexionseigenschaften für den in Betracht gezogenen Frequenzbereich aus dem Spektrum der elektromagnetischen Strahlung, also beispielsweise für Radarstrahlung im Gigahertz-Frequenzbereich oder für Infrarot-Strahlung; je nach der Arbeitsweise des zu testenden Suchkopfes 13.

Vom Suchkopf 13 wird in praktisch jeder realistisch in Betracht zu ziehenden räumlichen Stellung der erste Hohlspiegel 19.1 erfaßt, und damit aufgrund der Strahlengeometrie über den zweiten Hohlspiegel 19.2 auch stets wenigstens das zentrale, im oder hinter dem Brennpunkt 14.2 gelegene Antennenelement 17 des Zielsimulators 20. Entsprechend den realistischen Verhältnissen beim Einsatz eines solchen Suchkopfes 13 in Lenkmunition 21 in der Zielsuchphase entstehen, trotz der nur endlichen Abmessungen des Zielsimulators 20, nun keine Lücken im Gesichtsfeld des Suchkopfes 13; er verliert also das mittels des Simulators 20 dargestellte Ziel also nicht wieder, nachdem er es einmal - beispielsweise durch Einschwenken der Wirkrichtung des Suchkopfes 13 aus einem reflexfreien Raumsektor 22 in die Spiegelfläche des ersten Hohlspiegels 19.1 erfaßt hat.

Beim hier in Betracht gezogenen Realisierungsbeispiel handelt es sich um einen aktiven Suchkopf 13, der also im praktischen Einsatzfall elektromagnetische Energie zum Absuchen eines Zielgebietes (dargestellt durch den Raumsektor 22 und die benachbarte Fläche des Hohlspiegels 19.1) nach einem anzusteuernden Zielobjekt absucht, wobei in diesem und aus seiner Umgebung vom Suchkopf 13 ausgesandte Strahlungsenergie reflektiert und im Suchkopf 13 wieder empfangen wird. Um diesen Vorgang zu simulieren wird in der Prüfeinrichtung 11 mittels des Antennenelementes 17 die vom Suchkopf 13 ausgesandte und über die Strahlen 18 eingekoppelte elektromagnetische Energie empfangen, in einem Simulationsrechner 23 mit typischen Signaturen in Betracht kommender Zielklassen und unvermeidlicher Clutter-Einflüsse moduliert und mit einer Zeitverzögerung, die einem realistischen momentanen Abstand des Suchkopfes 13 vom Zielobjekt entspricht, über die Hohlspiegel 19 an die Empfangseinrichtung im Suchkopf 13 zurückgesandt, um in dessen Signalverarbeitungseinrichtung 24 analysiert und zur Beeinflussung eines Zielverfolgungs-Flugreglers 25 ausgewertet werden zu können. die daraus resultierenden Steuergrößen für die Beeinflussung der momentanen Fluglage der Lenkmunition 21 werden an einen Flugsimulator 26 zur Ansteuerung des Drehtisches 12, also zur räumlichen Veränderung der Orientierung des Suchkopfes 13 übermittelt, so daß der Suchkopf 13 realistisch auf die momentane Zielinformation vom Zielsimulator 20 reagiert und etwaige Fehlfunktionen feststellbar bzw. durch angeschlossene Meßgeräte (in der Zeichnung nicht berücksichtigt) registrierbar und auswertbar sind.

In der Zeichnung ist die Lenkmunition 21 mit ihrem Flugregler 25 nur gestrichelt dargestellt, um dadurch zum Ausdruck zu bringen, daß die Prüfeinrichtung 11 auch für die Prüfung des Suchkopfes 13 als solchem (also ohne das Gesamtsystem der Zielansteuerung mittels einer Lenkmunition) getestet werden kann, beispielsweise durch in einer Ebene quer zu den Parallelstrahlen 18 verfahrbare Prüfempfängereinrichtung 27 für da sAusmessen der Antennencharakteristik des Suchkopfes 13.

Um ein Ziel zu simulieren, dessen charakteristischen Teilreflektoren (bei aktivem Suchkopf 13) bzw. Teilstrahler (bei passivem Suchkopf 13 wie einem Infrarot-Suchkopf oder einem Radiometer-Suchkopf) in der Tiefe gestaffelt sind, braucht nur der entsprechende Anteil der vom Simulationsrechner 23 gelieferten Zielsignatur 28 entsprechend verzögert der vom Antennenelement 17 abgestrahlten Information beigemischt zu werden, was eine größere Variationsbreite ermöglicht, als eine räumliche Verlagerung des Antennenelementes 17 in Strahlenrichtung aus dem Brennpunkt 14.2 heraus. Wenn jedoch entsprechende in der Breite gestaffelte Charakteristika beim Zielsimulator 20 berücksichtigt werden sollen, dann ist, wie in der Zeichnung dargestellt, die Halterung 16 aus dem Brennpunkt 14.2 herauszuversetzen und mit einer Mehrzahl an Antennenelementen 17 zu bestücken, die dadurch - gemäß den strahlengeometrischen Gegebenheiten - gleichzeitig vom Suchkopf 13 erfaßt werden.

Eine Verschwenkung des Zielaspektes ist gleichermaßen durch Verschwenkung der Halterung 16 wie durch entsprechende zeitliche Staffelung der Speisung ihrer einzelnen Antennelemente 17 aus dem Simulationsrechner 23 mit entsprechenden Anteilen der Gesamt-Zielsignatur möglich, um dadurch testen zu können, ob die Signalverarbeitungseinrichtung 24 des Suchkopfes 13 auch unter ungünstigen Annäherungswinkeln die Verfolgung eines interessierenden Zieles sicherstellt.

Grundsätzlich kann die Prüfeinrichtung 11, mit Erfassung des als Transponder arbeitenden Zielsimulators 20 vom Suchkopf 13 aus über ein beispielsweise aus zwei Hohlspiegeln 19 bestehendes Abbildungssystem, im Freien arbeiten. Schon um die Strahlengeometrie störende Umwelteinflüsse auf die Spiegel 19 sowie störende Einstrahlungen oder Abstrahlungen zu vermeiden und um Suchkopf-Tests in reproduzierbar vorgebbaren atmosphärischen Gegebenheiten durchführen zu können, ist es jedoch zweckmäßig, wie in der Zeichnung berücksichtigt, die beiden Hohlspiegel 19.1, 19.2 - vorzugsweise die gesamte Prüfeinrichtung 11, also einschließlich der Kopplung durch die Parallelstrahlen 18 zwischen den Spiegeln 19 - in einem geschlossenen Raum 29 zu installieren. Dieser ist in allen kritischen Bereichen mit Absorbern 30 ausgestattet, um Empfangs-Verfälschungen seitens der Antennenelemente 17 und des Suchkopfes 13 durch Streustrahlungs-Reflexionen zu vermeiden. Zweckmäßigerweise ist ferner eine Absorber-Barriere 31 zwischen dem Drehtisch 12 und dem Zielsimulator 20 angeordnet, um hier direkte Streustrahlungsverbindungen zu unterbinden.

## Ansprüche

1. Prüfeinrichtung (11), insbesondere für Suchköpfe (13) intelligenter Lenkmunition (21), mit einem Zielsimulator (20) zur Abstrahlung einer Zielsignatur (28) über Antennelemente (17) an den auf einen Drehtisch (12) mit Flugsimulator (26) montierten Suchkopf (13),
dadurch gekennzeichnet,
daß der Zielsimulator (20) und der Suchkopf (13) jeweils zumindest dicht beim Brennpunkt (14.2, 14.1) eines quasioptischen Abbildungssystems (15) angeordnet sind.

2. Prüfeinrichtung nach Anspruch 1,
dadurch gekennzeichnet,
daß das Abbildungssystem (15) als Linsensystem ausgebildet ist.

3. Prüfeinrichtung nach Anspruch 1,
dadurch gekennzeichnet
daß das Abbildungssystem (15) zwei aufeinander zu weisende Hohlspiegel (19.1, 19.2), mit jeweils exzentrisch gelegenem Brennpunkt (14.1, 14.2) aufweist, zwischen denen eine Kopplung über Parallelstrahlen (18) besteht.

4. Prüfeinrichtung nach einem der vorangehenden Ansprüche,
dadurch gekennzeichnet
daß der Zielsimulator (20) ein Antennenelement (17) im oder hinter dem Brennpunkt (14.2) aufweist.

5. Prüfeinrichtung nach einem der vorangehenden Ansprüche,
dadurch gekennzeichnet,
daß der Zielsimulator eine Mehrzahl an gegeneinander versetzten Antennenelementen (17) aufweist.

6. Prüfeinrichtung nach einem der vorangehenden Ansprüche,
dadurch gekennzeichnet,
daß der Zielsimulator (20) in unterschiedlichen Positionen und Orientierungen bezüglich des zugeordneten Brennpunktes (14.2) einstellbar ist.

7. Prüfeinrichtung nach einem der Ansprüche 3 bis 6,
dadurch gekennzeichnet,
daß wenigstens jeder der Hohlspiegel (19) in einem abgeschlossenen Raum (29) angeordnet ist, der mit Absorbern (30) ausgeschlagen ist.

8. Prüfeinrichtungn nach Anspruch 7,
dadurch gekennzeichnet,
daß sie insgesamt in einem Raum (29) ausgebildet ist und daß zwischen dem Zielsimulator (20) und dem Drehtisch (12) eine Absorber-Barriere (31) ausgebildet ist.

9. Prüfeinrichtung nach einem der vorangehenden Ansprüche,
dadurch gekennzeichnet,
daß der Zielsimulator (12) wahlweise als Sender - bei passiv arbeitendem Suchkopf (13) - oder als Transponder - bei aktiv arbeitendem Suchkopf (13) - betreibbar ist.

10. Prüfeinrichtung nach einem der vorangehenden Ansprüche,
dadurch gekennzeichnet,
daß eine quer zum Strahlengang der Parallelstrahlen (18) im Abbildungssystem (15) einstellbare Prüfempfängereinrichtung (27) vorgesehen ist.

0 269 843